# EUROPEAN PATENT SPECIFICATION

(11) **EP 0 545 499 B1**
(45) Date of publication and mention of the grant of the patent: **12.03.1997**
(21) Application number: 92203718.9
(22) Date of filing: 01.12.1992
(51) Int. Cl.: H02P 7/622, F24F 11/00

(54) **Method of exchanging control data and setting signals via a communication link with a ventilator and a ventilator for executing said method**
Verfahren zum Austauchen von Regelungsdaten und Steuerungssignalen mittels einer Datenverbindung mit einem Ventilator und Ventilator zum Durchführen dieses Verfahrens.
Methode pour échanger des données de contrôle et des signaux de positionnement via un moyen de communication avec un ventilateur et ventilateur pour réaliser cette méthode.

(30) Priority: 02.12.1991 NL 9102016
(43) Date of publication of application: 09.06.1993
(73) Proprietor: INDOLEC B.V., NL-3503 RC Utrecht (NL)
(72) Inventor: Benschoo, Teunis, NL-3411 AN Lopik (NL)
(74) Representative: de Bruijn, Leendert C.

(56) References cited:
- WO-A-84/00624
- DE-A- 3 124 966
- DE-A- 3 642 726
- NL-A- 8 801 190
- PATENT ABSTRACTS OF JAPAN vol. 10, no. 385 (M-548) 24 December 1986; & JP-A-61 175 435
- PATENT ABSTRACTS OF JAPAN vol. 7, no. 265 (M-258)(1410) 25 November 1983; & JP-A-58 145 841
- PATENT ABSTRACTS OF JAPAN vol. 8, no. 170 (M-315)(1607) 7 August 1984; & JP-A-59 063 438

## Description

A ventilator, in particular for use in the agricultural sector, comprises a fan, an electromotor having at least one excitation winding and a rotor coupled to the fan, controllable excitation means coupled to the at least one excitation winding and provided with connection terminals for connection to a power supply and means for detecting the rotary speed of the fan.

A ventilator of this type is disclosed per se by Netherlands Patent Application 8801190 wherein setting means are provided for remotely setting a desired fan rotary speed, or a desired air displacement velocity.

Although said ventilator known from the prior art makes a precise control possible, there is a need, partly because of progressive automation in industrial applications, for ventilators also in the agricultural sector, where ventilators of the present type are used on a large scale for air freshening in intensive livestock farming, it being possible not only to control said ventilators remotely but also to determine the instantaneous operating state of the ventilator concerned remotely.

In order to meet this need, the invention provides a digitally controlled ventilator of the type mentioned above, which comprises a digital processing circuit coupled to the excitation means and provided with a processor and at least one memory for storing control and processing software and control parameters, and also communication means, coupled to the processor, for the exchange of control data via a communication link.

With the aid of said communication link, information can be transferred to the processor in the processing circuit of the ventilator from a control station, for example a personal computer or a control unit in an automation environment or the like, and data can be transmitted from the ventilator to the control station. The information to be exchanged may comprise, for example, periodically checking the operating state of the ventilator and/or the occurence of emergency situations, such as the the motor stopping, an excessively high motor temperature, a more than normal difference between the actual and set air displacement velocity etc. In addition to setting the fan rotary speed with the aid of separate setting means, the excitation means for controlling the motor excitation can also be set via the communication link.

This latter possibility is, for example, of importance, in particular, if the ventilator according to the invention is used in conjunction with one or more ventilators as specified in Netherlands Patent Application 88.01190, in which the setting means for the fan rotary speed have been implemented jointly for all the ventilators. The processing circuit of the ventilator according to the invention can be set in that case by means of the communication link in such a way that said circuit does not respond, for example, to the general setting signal for setting the fan rotary speed but to a setting transmitted via the communication link.

It is noted that air-conditioning installations for controlling atmospheres in large buildings such as offices, hospitals, flats and the like are known in practice, and in these use is made of processor-controlled air-conditioning units provided with heat exchangers, air filters, temperature, humidity and pressure sensors, blowers, electromagnetically and/or pneumatically controlled valves etc. Said air-conditioning units are connected via air ducts having (regulable) air inlet and outlet openings to a central air-conditioning control unit from which the air-conditioning units are controlled and sampled.

The International Patent Application WO-A-8,400,624 describes an example of such an air-conditioning installation in which an extensive data exchange between the air-conditioning units and a central control unit is aimed at, inter alia with the object of avoiding duplication of sensors. German Patent Application DE-A-3,124,966 describes a processor-controlled air-conditioning installation provided with selection means for making it possible to selectively couple switching and display units to various units in the installation. The Japanese Patent Application JP-A-59.063.438 also relates to a plurality of air-conditioning units which are connected to a central control unit provided with switches for the optional time control of the switching-on and switching-off of air-conditioning units.

Japanese Patent Application JP-A-61.175.435 discloses an air-conditioning unit having a processor-controlled digital control and processing circuit which is designed, in particular, to make the fan in the air-conditioning unit rotate at a desired rotary speed as rapidly as possible. This is to achieve the desired air condition, in particular in relation to the temperature in the room, as rapidly as possible and with as little as possible wind noise due to altering the rotary speed of the fan.

For this purpose, the fan is started in the first instance at a predetermined, low rotary speed, the fan loading state occurring at this rotary speed being measured with the aid of an air velocity sensor. Said loading state is dependent on the degree of contamination of an air filter mounted downstream of the fan. Depending on the loading state measured, the fan rotary speed associated with a desired air displacement velocity is then determined with the aid of the processor on the basis of parameter values stored in the memory. The excitation means are then set in such a way that the fan rotates at the rotary speed determined. The fan rotary speed is then continuously adjusted as a function of changes in the air displacement velocity of the fan under the control of the processor in order to maintain the desired, set air displacement velocity.

For air freshening in the agricultural sector, including intensive livestock farming, to which the invention relates in particular, use cannot be made of air-conditioning units for air-conditioning in buildings, as described above. Inter alia, this is because the ventilators for use in pig stys and/or poultry houses must be able to function well in air containing a large amount of ammonia, dust and moisture. The use of air ducts in this case can generally not be considered because air drawn in directly from outside is usually introduced untreated into the room to be ventilated. This is in contrast to air-conditioning installations in the domestic and public sector, where fresh air is usually first treated centrally and then distributed in a building in a metered way via the air ducts. In view of the severe degree of contamination of the air in the agricultural sector, the air volumes to be displaced are generally much larger in scale than in air-conditioning installations for atmosphere regulation.

Air-conditioning installations for the domestic and public market are therefore unsuitable for use in the agricultural sector, to which the present invention relates in particular. This is not only because of the differences in the technical specifications and the relatively high costs of such air-conditioning units but also because of the specific differences in the internal atmosphere between office buildings, on the one hand, and livestock farming, on the other hand. Partly as a result of the nature of the contaminated air, inter alia the strong unpleasant smell and the treatment thereof, in particular the removal of ammonia, the agricultural sector has its own contractors, suppliers and equipment, which differ from the domestic and public market. In the present case, it therefore has differing air-treatment units other than those used for air conditioning in office buildings, hospitals and the like.

Any communication link known per se for exchanging information in digital form is suitable for the object of the invention, it being possible to use wire conductors, radiographic paths, optical paths (glass fibre cable, infrared radiation) etc.

The invention has the object to provide for a method, in which both control data and setting signals are exchanged with a ventilator via a single communication link.

This object is achieved in that the method comprises the following steps under control of a processor:
- sampling of signals emitted by communication means interconnected between the communication link and the processor;
- the determination of the frequency of the sampled signal in order to determine whether it is a setting signal or a data transmission; and
- in the case of a setting signal:
   - the conversion of the frequency of the sampled signal into a control signal for setting the ventilator; and
- in the case of data transmission:
   - the interpretation of the data received and the performance of the instructions contained therein; and
   - the transmission of data from the ventilator via the communication means and the communication link in response to the instruction concerned.

The sampling of the signals originating from the communication means may be performed by the processor on an interrupt basis in view of the relatively slow information exchange. Depending on the received frequency of the signal variations on the communication link, it can then easily be determined whether the signal is a setting signal originating from the means for setting the fan rotary speed, which signal has, in an embodiment of the invention, a frequency in the range between 9 and 187 Hz, corresponding to a fan rotary speed of 4% and 100%, respectively, of the nominal value, or a data transmission with a data exchange rate of, for example, 1,200 baud.

For application in a ventilator system provided with ventilators which can be separately addressed, the step of interpreting the received data comprises, in a further embodiment, of the method according to the invention, the determination-of address coincidence on the basis of the address stored at a ventilator and the received address and, in the event of address coincidence, the interpretation of the received data and the performance of the instruction contained therein.

The instructions to be transmitted to the ventilator may be subdivided into four main groups, namely the reading of a set value, for example the address of the ventilator; the operating state, emergencies etc.; the setting of the ventilator control to a certain mode, for example whether or not to respond to a setting signal from the setting means for setting the fan rotary speed; the alteration of a set operating state, for example the fan rotary speed; and the reading and, if necessary, altering of the data stored in the memory, including software and address data.

Because the ventilator according to the invention has to be able to function in an environment subject to severe (electromagnetic) interference, for example a workshop or the like, a reliable transmission protocol has been developed which is particularly suitable for the object of the invention and in which a typical data transmission comprises the transmission of a message in the form of a start code (start of text, STX) from a control station, followed by the destination address in duplicate, followed by the instruction to be performed in duplicate, followed by the parameter value associated with the instruction concerned in triplicate and concluded by a stop code (end of text ETX), after which a parameter value, which depends on the instruction concerned, is then transmitted in triplicate to the control station by the ventilator addressed. If all the ventilators are addressed simultaneously, the transmission of data from the ventilators to the control station can be suppressed.

Because it may be necessary, in certain environments, to maintain a desired air displacement in the event of malfucntion in the setting means, the control station or, for example, the communication link, provision is made, in a further embodiment of the method according to the invention, that, if a setting signal is absent, the ventilator or ventilators concerned is/are independently energized in such a way that each fan will rotate at a predetermined rotary speed (default setting).

The invention also relates to a ventilator for executing the method of one or more of the claims 1-6, comprising a fan, an electromotor having at least one excitation winding and a rotor coupled to the fan, controllable excitation means coupled to the at least one excitation winding and provided with connection terminals for connection to a power supply, and means for detecting the rotary speed of the fan. The above-mentioned object of exchanging control data and setting signals with a ventilator via a single communication link is achieved in that a processor coupled to the excitation means and to communication means provided with a combined input/output port for exchanging data, via a communication link and for supplying to the processor a setting signal from means for setting the fan rotary speed, and an input port coupled to the processing circuit and an output port, wherein the combined input/output port is constructed as a diode bridge circuit having a first and second pair of centre tappings, of which the first pair forms connection terminals for connecting the communication link and of which the second pair is connected to the input and the output of a first and a second optical coupling circuit, respectively, of which the output and the input, respectively, form the output port and the input port coupled to the processor, wherein the means for setting the fan rotary speed comprise a variable-frequency signal generator and wherein quiescent-signal signalling means are provided for exchanging control data.

In the invention, the communication means are designed to supply to the processing circuit via the communication link, in addition to control data, a setting signal originating from means for setting the fan rotary speed. In particular, if electrical and/or optical cables are used, this has an advantageous effect on the installation costs associated with the installation of one or more ventilators.

In the embodiment of the ventilator according to the invention, which is also suitable for use in conjuction with one or more ventilators as specified in said Netherlands Patent Application 8801190, the communication means are provided with a combined input/output port for exchanging data, via a two-wire communication link, with the control station and for supplying to the processing circuit the setting signal from the means for setting the fan rotary speed, and an input port coupled to the processing circuit and an output port.

Via de said two-wire link, a setting signal can be supplied either to one or more ventilators of the known type or to ventilators in accordance with the invention, it also being possible to exchange control data with the ventilators according to the invention.

It has been found that, in conjunction with means for setting the fan rotary speed in the form of a variable-frequency signal generator, which setting means are also used for setting the fan rotary speed of the known ventilator, exchange of control data over the two-wire communication link can take place by means of quiescent-signal signalling, without the setting being disturbed. In the English-language specialist literature, quiescent-signal signalling, in which the digital data bits are transmitted by altering the direct-current potential on the communication link, is also referred to as "nonreturn to zero" (NRZ)>

In communication means according to the invention which are suitable for this type of signal and data exchange, the combined input/output port is constructed as a diode bridge circuit having a first and second pair of centre tappings, of which the first pair forms connection terminals for connecting the two-wire communication link and of which the second pair is connected to the input and the output of a first and a second optical coupling circuit respectively, of which the output and input, respectively, form the output port and the input port coupled to the processing circuit. The communication means constructed in this way also provide a galvanic isolation between the processing circuit and the two-wire communication link.

In the ventilator according to the invention, means are also provided for recording and indicating the operating state of the ventilator. It has been found that an effective indication can be provided with an optical indicator such as a light-emitting diode (LED) by making the indicator or the LED light up with a certain rhythm.

The invention is explained below on the basis of a description of a preferred embodiment, with reference to the accompanying drawings, wherein:
Figure 1 shows a block diagram of the digital control circuit of a ventilator in accordance with the invention;
Figure 2 shows a diagram of a preferred embodiment of the communication means for communication via a two-wire link according to the invention;
Figure 3 shows a flow chart of an embodiment for the control of the ventilator according to the invention; and
Figure 4 shows an embodiment of the ventilator according to the invention provided with a measuring fan.

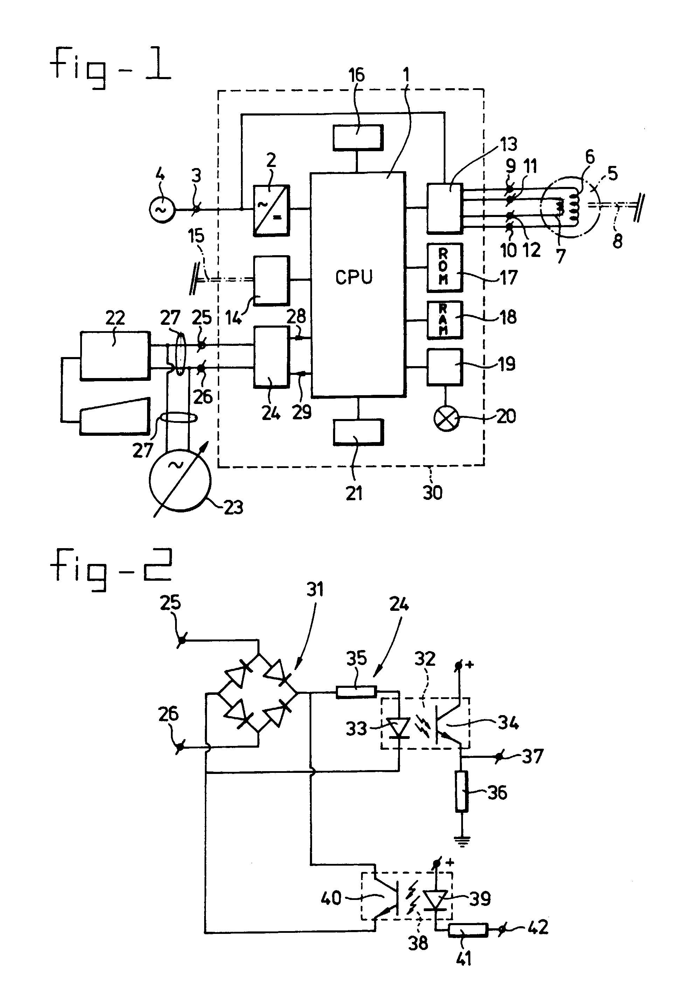

Figure 1 shows a block diagram of the digital control electronics for a ventilator in accordance with the invention. The reference numeral 1 indicates a central processor unit (CPU), to which a rectifier circuit 2 is consecutively connected in order to convert an alternating voltage, originating from an alternating-voltage power supply 4, for example the publivc electricity means, connected to the connection terminal 3, into a suitable direct voltage. Instead of the single-phase power supply shown, a multiphase power supply can, of course, be used. All this being dependent, inter alia, on the capacity of the drive motor 5 of the ventilator.

The motor 5 shown in figure 1 is of the single-phase type and contains a main excitation winding 6 and an auxiliary excitation winding 7 which are connected, via connection terminals 9, 10 and 11, 12, respectively, to controllable excitation means 13, for example in the form of a thyristor- or triac-controlled phase-angle control circuit, such as that described and shown in Netherlands Patent Application 88.01190. The excitation means 13 are controlled via the processor 1 and are connected to the connection terminal 3 in order to connect the supply voltage for the motor 5. The motor 5 furthermore comprises a rotor 8, which is diagrammatically indicated by dash-dot lines.

To measure the rotary speed of a fan linked to the rotor 8, means 14 are provided, for example in the form of an Hall generator circuit which, in conjunction with permanent magnets mounted on the rotor 8, emits a signal, which is proportional to the fan rotary speed, to the processor 1, or a tachogenerator or the like. The coupling of the motor 5 to the fan or the rotor is indicated diagrammatically with dash-dot lines 15.

To control the processor 1, a clock circuit 16, a nonvolatile memory 17 (read only memory ROM), optionally a volatile memory 18 (random access memory RAM), and means 19 for storing the operating state of the ventilator, for example in the form of a register circuit, and indicating means 20 for indicating the operating state, for example in the form of an optical indicator, such as a light-emitting diode (LED) are provided.

The processing software for the processor 1, and also control parameters and a destination address are stored in the ROM 17 and, if necessary, in the RAM 18. Instead of separate memories, use can advantageously be made of a so-called microcontroller which comprises the processor 1 and the memories 17, 18, as well as the register means 19 on a single semiconductor chip, such as, for example, a microcontroller of the type Motorola MC68HC705C8. Said microcontroller has an electrically programmable nonvolatile memory (EPROM) and registers for storing the operating state of the ventilator.

Optionally, manually operated setting means 21 may be coupled to the processor 1 for setting a desired motor or fan rotary speed manually at the ventilator itself.

To exchange data between a control station 22 and the processor 1, and also setting means 23 for setting a desired fan rotary speed, communication means 24 are provided which are connected, on the one hand, to the processor 1 via an output port 28 and an input port 29 and, on the other hand, to connection terminals 25, 26 for connection thereto of a two-wire communication link 27. Via said two-wire communication link, data from and to the control station 22 and from the setting means 23, in the form of a variable-frequency signal generator, can be exchanged with the processor 1.

The electronic components inside the block 30 are preferably mounted as an entity on a printed circuit board and encapsulated in a casting compound and are therefore resistant to high mechanical loads, contamination, moisture, chemicals and aggressive gases.

Figure 2 shows a preferred embodiment of the communication means 24 diagrammatically shown in Figure 1, comprising a diode bridge circuit 31, whose pair of centre tappings connected to the connection terminals 25, 26 form a combined input/output port for connecting the electrical two-wire communication line 27. The reference numeral 32 indicates a first optical coupling circuit, in general comprising a light-emitting diode LED 33 and a photosensitive transistor 34. The LED 33, which forms the input of the optical coupling circuit 32, is connected to the other pair of centre tappings of the diode bridge circuit 31 via a resistor 35. The collector-emitter path of the transistor 34 of the first optical coupling circuit 32 is connected to the output of the rectifying means 2 via a resistor 36. The connection terminal 37 forms the output port 28 of the communication means 24 for connection to the processor 1.

A second optical coupling circuit 38 is furthermore provided which comprises an LED 39 and a phototransistor 40, whose collector-emitter path is connected to the other pair of centre tappings of the diode bridge circuit 31, the LED 39 being connected, on the one hand, to the rectifier means 2 and, on the other hand, to a resistor 41, which terminates at a connection terminal 42, which forms the input port 29, to be connected to the processor 1, of the communication means 24.

The operation of the communication means 24 is such that a setting signal received from the setting means 23 and having a certain frequency is fed via the two-wire communication link 27 to the connection terminals 25, 26 of the diode bridge circuit 31, and via the first optical coupling circuit 32, it is presented to the connection terminal 37 as a square-wave voltage signal suitable for processing by the processor 1.

The data transmission takes place by means of quiescent-signal signalling (nonreturn to zero protocol), in which the two-wire communication link 27 is kept quiescent at a high potential, in a practical embodiment 5 volts, by the control station 22. As a result of the consecutive lowering of the quiescent potential to a lower potential, for example 0 volts, in synchronism with the data bits to be transmitted, a signal, varying in synchronism with the potential changes, is presented, via the diode bridge circuit 31 and the first optical coupling circuit 32, to the connection terminal 37 for further processing by the processor 1.

The transmission of data by the processor 1 to the control station 22 takes place via the second optical coupling circuit 38, in which process, the output terminals 25, 26 are short-circuited by controlling the LED 39 via the phototransistor 40 and the diode bridge circuit 31 in synchronism with the data bits to be transmitted, and this is detected and further processed by the control station 22.

With the aid of the communication means 24 shown in Figure 2, both a setting signal, which varies in frequency, from the setting means 23, and data can be exchanged with the processor 1 via the two-wire communication link 27. In practice, the frequency of the setting signal varies between approximately 9 and 187 Hz, and data are exchanged at a rate of 1200 baud. This means that communication with the processor 1 can take place approximately once every two seconds without disturbing the setting signal of the setting means 23 either for a ventilator according to the invention or for a ventilator in accordance with Netherlands Patent Application 88.01190 connected to the communication link 27.

Figure 3 shows a flow chart in which, by way of example, steps to be performed by the processor 1 are shown as a control algorithm of the ventilator according to the invention. Proceeding from the starting block 50, when the ventilator is started, all alarm systems which may be present are reset, as indicated by the block 51 "reset alarm". Whether the communication link is intact is then tested in the decision block 52. If this is not the case, when no setting signal or data are transmitted, for example if the line potential is 0 volt, the processor can either switch over to a desired rotary speed set with the manual operating means 21 (decision block 53 and block 54, respectively) or to a default setting (block 56) by means of an "emergency rotation" test in decision block 55.

Said "emergency rotation" test implies that, if the supply voltage at connection terminal 3 of the ventilator is switched on (Figure 1) and a setting signal is absent, for example as a result of a disconnection in the two-wire communication link 27 or a fault in the setting means 23, the motor is set to 100% of nominal fan rotary speed. Of course, another motor control percentage may also be set.

If the connection is in fact live, the processor 1 should determine whether a setting signal of the setting means 23 or data transmission is involved, and this is illustrated with the aid of decision block 57. In the event of data exchange, the processor 1 will interpret the received data (block 58) and will test by means of "address coincidence" (decision block 59) whether the received data are intended for the ventilator concerned. If that is not the case, the processor will then sample the communication link again, and so on. In the event of positive address coincidence, the instruction concerned will be performed (block 60) and a check-back (block 61) to the control station 22 will take place. After the procedure has been completed, the processor 1 again switches over to sampling the communication link.

Some important instructions are the requesting of the set fan rotary speed; the setting of the excitation means (motor control percentage); possible emergencies, such as motor too hot, jamming, no motor control; the setting of a desired mode such as responding or not responding to a setting signal from the setting means 23 for setting the fan rotary speed, resetting the alarm systems, altering a set fan rotary speed in order, for example, to set to a rotary speed differing from that of the other ventilators in a system or a different air displacement velocity; or, for example, altering one or more of the values stored in the memory, such as the address, parameter values, software, etc.

In the event that a setting signal is received from the fan rotary speed setting means 23, a test will first be made as to whether the ventilator concerned is set to the "setting signal control" mode (see block 62). If this is not the case, the setting signal is ignored, whereas, in the "setting signal control" mode, the frequency of the setting signal concerned is analysed and the fan rotary speed associated therewith is determined, as shown by block 63.

If the fan rotary speed set by means of the setting signal or the manual control is less than 4% of the nominal value (decision block 64), the motor is switched off (block 65), which is indicated by means of block 66 ("indication of operating state"). The motor is also switched off in the event of an emergency state (decision block 67), whereas, in the normal operating state (no emergency), the fan rotary speed is measured (block 68) and, if necessary, adjusted by means of the excitation means (decision block 69 and block 70). As an emergency state, inter alia, an excessively high motor temperature and jamming of the motor that is to say no rotation with excitation in operation, may result in the motor being switched off. Cut off of the setting signal in the situation in which no rotary speed has been set via the manual control means 21 (decision block 53), with the exception of the "emergency rotation" state (decision block 55), will be interpreted via block 71 as an emergency state.

The motor will not switch on automatically as soon as the emergency state resulting in the switch-off disappears, for example as a result of an overheated motor cooling or elimination of the fan jamming, etc. In order to start the ventilator or motor 5 again, the feeding of the supply voltage to the ventilator at connection terminal 3 has to be interrupted. The processor 1 interprets this interruption in the supply voltage as a reset command (block 51). This procedure achieves the result that a user has consciously noted an emergency state before switching on again. The control is designed in such a way that the motor or the ventilator can only be switched on after it has been deenergised for a certain time, for example one minute or longer (decision block 72).

The communication link is preferably monitored by the processor 1 on an interrupt basis. Whether a setting signal or data transmission is being presented on the communication link can then be determined by means of suitable software. Use is made of the ASCII code, which is known per se, for the data transmission.

In practice it has been found that two-byte addressing, that is to say a hundred unique addresses, is adequate. It will be clear that the processing program can be drawn up in such a way that a single ventilator, a group of ventilators or all the ventilators together can be provided with an instruction simultaneously.

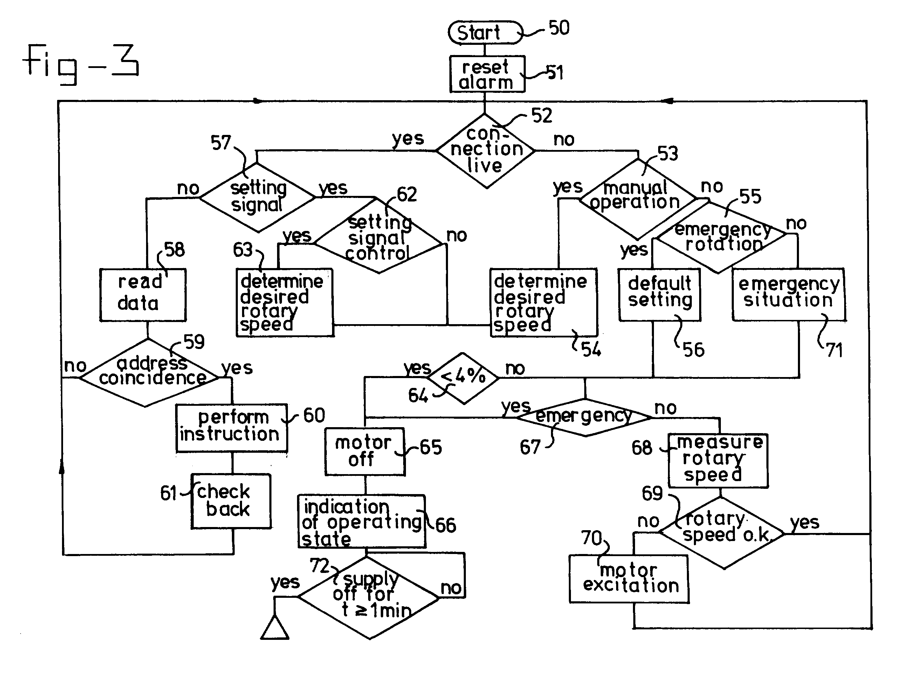

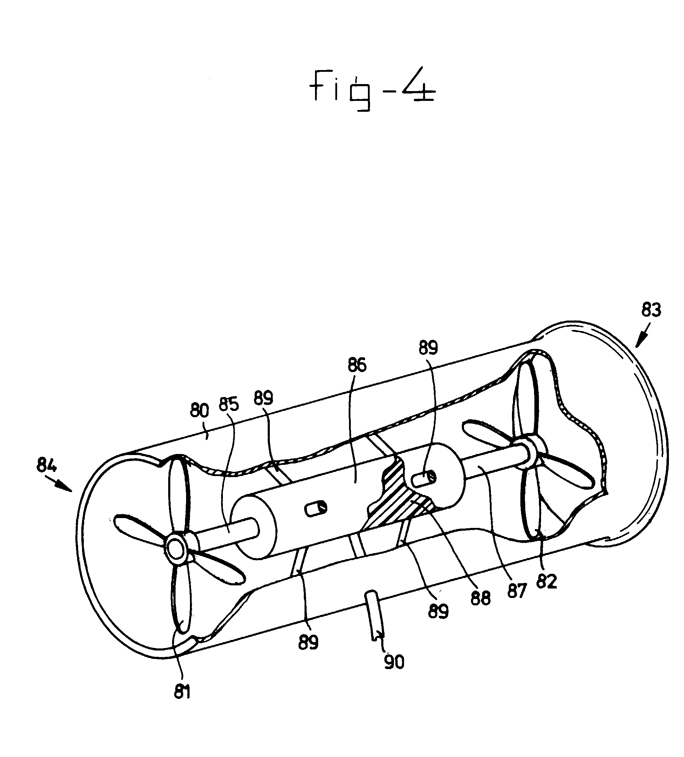

Figure 4 shows an embodiment of the ventilator according to the invention provided with a measuring pipe 80, and having a driven fan 81 and a measuring fan 82, which fans 81, 82 are arranged in the measuring pipe 80 in a mutually offset manner in the axial direction. The reference numeral 83 indicates the inlet opening, in the normal operating state, of the measuring pipe 80, while the reference numeral 84 indicates the outlet opening. The driven fan 81 is coupled via a shaft 85 to the drive motor, which is sited in a housing 86 in which the control electronics, which are encapsulated in a casting compound 88, are accommodated. The measuring fan 82 is mounted on a shaft 87 which is provided with magnets (not shown) which, in conjunction with a Hall generator circuit accommodated in the control electronics system, generates a signal corresponding to the instantaneous air displacement velocity in the measuring pipe 80 for processing by the processor 1 as a measure of the rotary speed of the driven fan 81. The housing 86 is mounted in the measuring pipe 80 by means of supports 89. A combined cable for providing power and controlling the ventilator is indicated by 90. Such a ventilator having a measuring pipe 80 with a diameter of 30-80 cm is suitable for displacing approximately 2,000-30,000 m³ of air per hour if a motor 5 having a power of 70-1000 W is used.

Although the invention has been illustrated above by reference to a preferred embodiment, it will be clear that the scope of protection is not limited thereto and that many modifications and additions are possible for a person skilled in the art without departing from the inventive idea, that is to say the provision of communication facilities for data transfer between the ventilator and a control station.

Thus, for example, the setting means 23 in the control station 22 can be integrated or the control station can be designed in such a way that it can generate a suitable frequency signal for setting the fan rotary speed independently. The ventilator according to the invention can furthermore perform all the settings and control possibilities cited in Netherlands Patent Application 88.01190.

## Claims

1. Method of exchanging control data and setting signals via a single communication link (27) with a ventilator, comprising the following steps under control of a processor (1):
- sampling of signals emitted by communication means interconnected between the communication link (27) and the processor (1);
- the determination of the frequency of the sampled signal in order to determine whether it is a setting signal or a data transmission; and
- in the case of a setting signal:
- the conversion of the frequency of the sampled signal into a control signal for setting the ventilator and
- in the case of data transmission:
- the interpretation of the data received and the performance of the instructions contained therein; and
- the transmission of data from the ventilator via the communication means and the communication link in response to the instruction concerned.

2. Method of exchanging control data and setting signals intended for one or more ventilators in a ventilator system according to claim 1, wherein the step of interpreting the received data comprises the determination of address coincidence on the basis of the address stored at the ventilator and the received address and, in the event of address coincidence, the interpretation of the received data and the performance of the instructions contained therein.

3. Method according to claim 1 or 2, wherein a typical data transmission comprises the transmission of a message in the form of a start code (start of text STX), followed by the destination address in duplicate, followed by the instruction to be performed in duplicate, followed by the parameter value associated with the instruction concerned in triplicate and concluded by a stop code (end of text ETX), and then the transmission in triplicate of a parameter value, which is dependent on the instruction concerned, to the control station by the ventilator addressed.

4. Method according to one or more of claims 1 to 3 inclusive, wherein indicating means comprise an optical indicator and wherein the operating state of the ventilator is shown by the number of times the indicator lights up and/or the frequency with which it does so.

5. Method according to one or more of claims 1 to 4 inclusive, wherein, if a setting signal is absent, the ventilator or ventilators concerned is/are independently energized in such a way that each fan will rotate at a predetermined rotary speed.

6. Method according to one or more of claims 1 to 5 inclusive, wherein, to set the fan rotary speed, a frequency-modulated alternating-voltage signal is fed to the communication link, the instantaneous frequency of the setting signal being a measure of the desired fan rotary speed, and the data transmission taking place by means of quiescent-signal signalling by setting the potential of the communication link from a first to a second level, the communication link being held at the first potential level at the end of the data transmission (nonreturn to zero protocol).

7. Ventilator for executing the method of one or more of the claims 1-6, comprising a fan, an electromotor (5) having at least one excitation winding (6) and a rotor (8) coupled to the fan, controllable excitation means (13) coupled to the at least one excitation winding (6) and provided with connection terminals for connection to a power supply (4), and means (14) for detecting the rotary speed of the fan, said ventilator being provided with a processor (1) coupled to the excitation means (13) and to communication means (24) provided with a combined input/output port for exchanging data, via a communication link and for supplying to the processor a setting signal from means (23) for setting the fan rotary speed, and an input port coupled to the processing circuit and an output port, wherein the combined input/output port is constructed as a diode bridge circuit (31) having a first and second pair of centre tappings, of which the first pair forms connection terminals for connecting the communication link and of which the second pair is connected to the input and the output of a first and a second optical coupling circuit, respectively, of which the output and the input, respectively, form the output port and the input port coupled to the processor, wherein the means for setting the fan rotary speed comprise a variable-frequency signal generator and wherein quiescent-signal signalling means are provided for exchanging control data.

## Patentansprüche

1. Verfahren zum Austauschen von Steuerdaten und Einstellsignalen über eine einzelne Kommunikationsverbindung (27) mit einem Ventilator, umfassend die folgenden Schritte unter der Steuerung eines Prozessors (1):
- Sampeln der Signale, welche durch eine Kommunikationseinrichtung immitiert werden, welche zwischengeschaltet ist zwischen der Kommunikationsverbindung (27) und dem Prozessor (1);
- Bestimmen der Frequenz des gesampelten Signales um zu bestimmen, ob es sich um ein Einstellsignal oder eine Datenübertragung handelt; und
- in dem Fall eines Einstellsignales:
- Wandeln der Frequenz des gesampelten Signales in ein Steuersignal zum Einstellen des Ventilators und
- in dem Fall der Datenübertragung:
- Interpretation der empfangenen Daten und Durchführen der darin enthaltenen Instruktionen; und
- Übertragung von Daten von dem Ventilator über die Kommunikationseinrichtung und die Kommunikationsverbindung, ansprechend auf die betroffene Instruktion.

2. Verfahren zum Austauschen von Steuerdaten und Einstellsignalen, beabsichtigt für einen oder mehrere Ventilatoren in einem Ventilatorsystem nach Anspruch 1, bei welchem der Schritt des Interpretierens der empfangenen Daten umfaßt Bestimmung von Adreßkoinzidenz auf der Basis der Adresse, welche an dem Ventilator gespeichert ist, und der empfangenen Adresse und in dem Fall von Adressenkoinzidenz Interpretation der empfangenen Daten und Durchführen der darin enthaltenen Instruktionen.

3. Verfahren nach Anspruch 1 oder 2, bei welchem eine typische Datenübertragung umfaßt die Übertragung einer Nachricht in der Form eines Startcodes (Start des Textes STX), gefolgt von einer Destinationsadresse, zweifach, gefolgt von der durchzuführenden Instruktion, zweifach, gefolgt von dem Parameterwert, welcher der betroffenen Instruktion zugeordnet ist, dreifach, und abgeschlossen durch einen Stopcode (Ende des Textes ETX), und nachfolgend Übertragung eines Parameterwertes, dreifach, welcher abhängig ist von der betroffenen Instruktion, zu der durch den Ventilator adressierten Steuerstation.

4. Verfahren nach einem oder mehreren der Ansprüche 1-3, bei welchem eine Indikationseinrichtung einen optischen Indikator enthält, und bei welchem der Betätigungszustand des Ventilators angezeigt wird durch die Anzahl der Male, die der Indikator aufleuchtet und / oder die Frequenz, bei welcher er dies tut.

5. Verfahren nach einem oder mehreren der Ansprüche 1-4, bei welchem der oder die betroffenen Ventilatoren unabhängig in solch einer Weise stromversorgt werden, daß sich jeder Lüfter bei einer vorbestimmten Rotationsgeschwindigkeit dreht, wenn ein Einstellsignal fehlt.

6. Verfahren nach einem oder mehreren der Ansprüche 1-5, bei welchem zur Einstellung der Lüfterrotationsgeschwindigkeit ein frequenzmoduliertes Wechselspannungssignal zu der Kommunikationsverbindung gespeist wird, wobei die momentane Frequenz des Einstellsignales ein Maß für die gewünschte Lüfterrotationsgeschwindigkeit ist, und wobei die Datenübertragung stattfindet mittels eines Leerlauf-Signals, welches durch Einstellen des Potentiales der Kommunikationsverbindung von einem ersten auf einen zweiten Pegel signalisiert, daß die Kommunikationsverbindung auf einem ersten Potentialpegel an dem Ende der Datenübertragung gehalten wird (nicht rückkehrt zum Nullprotokoll).

7. Ventilator zum Durchführen des Verfahrens nach einem oder mehreren der Ansprüche 1-6, umfassend einen Lüfter, einen Elektromotor (5) mit zumindest einer Erregerwicklung (6) und einem Rotor (8), welcher mit dem Lüfter gekoppelt ist, eine steuerbare Erregereinrichtung (13), gekoppelt zumindest mit einer Erregerwicklung (6) und bereitgestellt mit Verbindungsanschlüssen zur Verbindung mit einer Leistungszufuhr (4), sowie einer Einrichtung (14) zum Erfassen der Rotationsgeschwindigkeit des Lüfters, wobei der Ventilator bereitgestellt ist mit einem Prozessor (1), welcher mit der Erregereinrichtung (13) und der Kommunikationseinrichtung (24) gekoppelt ist, welche bereitgestellt ist mit einem kombinierten Eingangs-/ Ausgangsport zum Austauschen von Daten über eine Kommunikationsverbindung und zum Liefern eines Einstellsignales zu dem Prozessor von einer Einrichtung (23) zum Einstellen der Lüfterrotationsgeschwindigkeit sowie einem Eingangsport, welcher mit der Verarbeitungsschaltung gekoppelt ist und einem Ausgangsport, wobei der kombinierte Eingangs-/ Ausgangsport aufgebaut ist als eine Diodenbrückenschaltung (31) mit einem ersten und zweiten Paar von mittleren Zapfen, wovon das erste Paar Verbindungsanschlüsse zur Verbindung mit der Kommunikationsverbindung bildet, und wovon das zweite Paar jeweils verbunden ist mit dem Eingang bzw. dem Ausgang einer ersten und einer zweiten optischen Kopplungsschaltung, wovon jeweils der Ausgang und der Eingang den Ausgangsport und den Eingangsport bilden, welche mit dem Prozessor gekoppelt sind, wobei die Einrichtung zum Einstellen der Lüfterrotationsgeschwindigkeit einen variablen Frequenzsignalgenerator umfaßt, und wobei eine Leerlauf-Signalsignalisiereinrichtung bereitgestellt ist zum Austauschen von Steuerdaten.

## Revendications

1. Procédé pour échanger des données de contrôle et des signaux de réglage à travers une seule liaison de communication (27) avec un ventilateur, comprenant les étapes suivantes sous la commande d'un processeur (1):
- l'échantillonnage de signaux émis par des moyens de communication interconnectés entre la liaison de communication (27) et le processeur (1);
- la détermination de la fréquence du signal échantillonné de manière à déterminer si il s'agit d'un signal de réglage ou d'une transmission de données; et
- dans le cas d'un signal de réglage:
- la conversion de la fréquence du signal échantillonné en un signal de commande pour régler le ventilateur et
- dans le cas d'une transmission de données:
- l'interprétation des données reçues et l'exécution des instructions qui y sont contenues; et
- la transmission des données à partir du ventilateur à travers les moyens de communication et la liaison de communication en réponse à l'instruction concernée.

2. Procédé pour échanger des données de contrôle et des signaux de réglage prévu pour un ou plusieurs ventilateurs dans un système de ventilateurs selon la revendication 1, dans lequel l'étape d'interprétation des données reçues comprend la détermination de coïncidence d'adresses en se basant sur les adresses mémorisées au niveau du ventilateur et les adresses reçues et, dans le cas de coïncidence d'adresses, l'interprétation des données reçues et l'exécution des instructions qui y sont contenues.

3. Procédé selon la revendication 1 ou 2, dans lequel une transmission de données caractéristiques comprend la transmission d'un message sous la forme d'un code de départ (début de texte, STX), suivie de l'adresse de destination en double, suivie de l'instruction à exécuter en double, suivie par la valeur de paramètre associée à l'instruction concernée en triple, et conclue par un code d'arrêt (fin de texte, ETX), et, ensuite, la transmission en triple d'une valeur de paramètre, qui dépend de l'instruction concernée, au poste de commande par le ventilateur adressé.

4. Procédé selon l'une ou plusieurs des revendications 1 à 3, dans lequel un moyen indicateur comprend un indicateur optique et dans lequel l'état de fonctionnement du ventilateur est représenté par le nombre de temps d'éclairage de l'indicateur et/ou par la fréquence d'éclairage de l'indicateur.

5. Procédé selon l'une ou plusieurs des revendications 1 à 4, dans lequel, dans le cas où un signal de réglage est absent, le ventilateur ou les ventilateurs concernés sont alimentés indépendamment de telle manière que chaque ventilateur tourne avec une vitesse de rotation prédéterminée.

6. Procédé selon l'une ou plusieurs des revendications 1 à 5, dans lequel, pour régler la vitesse de rotation du ventilateur, un signal de tension alternative à modulation de fréquence est amené à la liaison de communication, la fréquence instantanée du signal de réglage étant une mesure de la vitesse de rotation de ventilateur désirée, et la transmission de données se faisant au moyen d'une signalisation avec signal de repos ( quiescent signal signalling ) en réglant le potentiel de la liaison de communication d'un premier niveau à un second niveau, la liaison de communication étant maintenue au premier niveau de potentiel à la fin de la transmission de données ( protocole de non remise à zéro ).

7. Ventilateur pour exécuter le procédé selon l'une ou plusieurs des revendications 1 à 6, comprenant une hélice de ventilateur, un électromoteur (5) ayant au moins un enroulement d'excitation (6) et un rotor (8) couplé à l'hélice de ventilateur, un moyen d'excitation (13), pouvant être commandé, connecté au dit au moins un enroulement d'excitation (6) et pourvu de bornes de raccordement pour raccordement à une source d'alimentation (4), et un moyen (14) pour déterminer la vitesse de rotation du ventilateur, ledit ventilateur étant pourvu d'un processeur (1) connecté au moyen d'excitation (13) et à un moyen de communication (24) pourvu d'un connecteur ( port ) d'entrée et sortie combinées pour échanger des données, à travers une liaison de communication, et pour amener au processeur un signal de réglage provenant d'un moyen (23) pour régler la vitesse de rotation du ventilateur, et un connecteur ( port ) d'entrée connecté au circuit processeur et un connecteur ( port ) de sortie, où le connecteur d'entrée et sortie combinées est réalisé sous la forme d'un circuit en pont de diodes (31) ayant une première et une seconde paire de prises médianes, parmi lesquelles la première paire forme bornes de raccordement pour connecter la liaison de communication et la seconde paire est connectée à l'entrée et à la sortie de, respectivement, un premier et un second circuit de couplage optique, la sortie et l'entrée, respectivement, de ces derniers, formant le connecteur de sortie et le connecteur d'entrée qui sont connectés au processeur, où le moyen pour régler la vitesse de rotation de l'hélice de ventilateur comprend un générateur de signal à fréquence variable et où des moyens de signalisation avec signal de repos ( quiescent signal signalling ) sont mis en oeuvre pour échanger des données de contrôle.
